# EUROPÄISCHE PATENTSCHRIFT

(11) **EP 2 540 431 B1**
(45) Veröffentlichungstag und Bekanntmachung des Hinweises auf die Patenterteilung: **02.08.2017**
(21) Anmeldenummer: 12168782.6
(22) Anmeldetag: 22.05.2012
(51) Int. Cl.: B23K 11/04

(54) **Abbrennstumpfschweißmaschine mit einem durch einen Servomotor angetriebenen Kurvengetriebe**
Flash butt welding machine with a cam system powered with a servomotor
Machine à souder par étincelage avec un système à came entrainé par un servomoteur

(30) Priorität: 01.07.2011 DE 202011050606 U
(43) Veröffentlichungstag der Anmeldung: 02.01.2013
(60) Teilanmeldung: 14185059.4
(73) Patentinhaber: Ideal-Werk C. & E. Jungeblodt GmbH & Co.KG, 59557 Lippstadt (DE)
(72) Erfinder: Jungeblodt Max Clemens, 59555 Lippstadt (DE)
(74) Vertreter: Graefe, Jörg

(56) Entgegenhaltungen:
- DE-A1- 2 233 647
- JP-A- 9 024 477
- US-A- 2 085 049
- US-A- 2 435 026

## Beschreibung

Die vorliegende Erfindung betrifft eine Abbrennstumpfschweißmaschine gemäß dem Oberbegriff des Anspruchs 1, siehe z.B. DE22 33 647. Eine Abbrennstumpfschweißmaschine dieser Art wird unter anderem von der IDEAL-Werk C.& E. Jungeblodt GmbH & Co. KG, Lippstadt, Deutschland, unter der Bezeichnung BAS und unter anderen Bezeichnungen seit Jahrzehnten hergestellt und vertrieben.

Bei dieser Art von Abbrennstumpfschweißmaschinen wird eine Kurvenscheibe des Kurvengetriebes von einem Elektromotor mit einer gleichbleibenden Geschwindigkeit angetrieben. In der Kurve der Kurvenscheibe ist die Bewegung des ersten Haltemittels programmiert. Die Kurve hat verschiedene Abschnitte, die jeweils einem Verfahrensschritt des Abbrennstumpfschweißvorgangs zugeordnet sind. Bei einer Kurvenscheibe für eine Abbrennstumpfschweißmaschine der eingangs genannten Art können beispielsweise bis zu sieben Abschnitte unterschieden werden, die sich in der Steigung der Kurve pro Winkelgrad unterscheiden.
Eine derartige Abbrennstumpfschweißmaschine kann nach einem Schweißen der Fügepartner dazu genutzt werden die Schweißung zu Glühen, um Spannungen zu beseitigen. Dazu wird das Werkstück mit einem größeren Abstand der Haltemittel neu eingespannt. Das erste Haltemittel wird vom Antrieb entkoppelt, so dass das erste Haltemittel frei bewegbar ist, wodurch Verwerfungen vermieden werden, die entstehen könnten, wenn das Werkstück bei festem Abstand der Haltemittel eingespannt ist.

Soll mit einer solchen Abbrennstumpfschweißmaschine ein Abbrennstumpfschweißvorgang mit einem anderen Programm durchgeführt werden, muss in der Regel die Kurvenscheibe der Abbrennstumpfschweißmaschine ausgetauscht werden. Da sich die Abbrennstumpfschweißvorgänge von Produkt zu Produkt unterscheiden können, ist eine Vielzahl von Kurvenscheiben notwendig, die die Programme zur Durchführung der Schweißvorgänge codieren. Das ist umständlich und aufwändig.

In der Vergangenheit wurden daher Abbrennstumpfschweißmaschinen entwickelt, die eine größere Flexibilität haben. Eine solche Maschine ist in einer Patentanmeldung aus den USA beschrieben, die unter der Nummer US 2004/0188392 A1 veröffentlicht wurde. Die dort beschriebene Maschine weist eine Spindel auf, die von einem Servomotor angetrieben ist. Die Spindel bewegt das erste Haltemittel gegenüber dem zweiten Haltemittel, um die beiden Fügepartner anzunähern, von einander zu entfernen und gegeneinander zu schlagen, wie es bei Abbrennstumpfschweißvorgängen üblich ist.

Eine programmierbare Steuerung ermöglicht es eine Vielzahl von verschiedenen Schweißvorgängen durchzuführen, ohne dass es dazu notwendig wäre Komponenten der Maschine auszutauschen.

Eine Abbrennstumpfschweißmaschine mit einem Servomotor und einer Spindel hat gegenüber einer Maschine mit einer Kurvenscheibe einen Nachteil, der darin liegt, dass der Stauchschlag, mit der die miteinander zu schweißenden Flächen der Fügepartner zusammengeschlagen werden, verglichen mit einer Maschine mit einer Kurvenscheibe nur langsam erfolgen kann. Gewünscht ist es aber die Fügepartner mit möglichst hoher Geschwindigkeit zusammen zu bringen, damit die Materialien der Fügepartner an den zu schweißenden Flächen einander gut durchdringen können und so eine belastbare und qualitativ hochwertige Schweißung entsteht. Der Vortrieb des einen Fügepartners gegen den anderen erfolgt dabei vorteilhaft nicht linear.

Auch ist eine Entkopplung des ersten Haltemittels von dem Antrieb, wie es für ein Glühen des Werkstücks sinnvoll ist, nicht ohne weiteres möglich.

Ein schneller Stauchschlag kann nur dann erreicht werden, wenn man die Spindel und die in die Spindel eingreifende Mutter außer Eingriff bringt, so dass das bewegliche, mit der Mutter gekoppelte Haltemittel für einen der Fügepartner unabhängig von der Bewegung des Servomotors angetrieben und für den Stauchschlag bewegt werden kann. Wenn man die Mutter und die Spindel außer Eingriff bringen kann, ist auch ein freies Bewegen des Haltemittels beim Glühen möglich.

Die Konstruktion für eine aus der Spindel auskuppelbare Mutter ist sehr aufwändig und teuer.

Eine Abbrennstumpfschweißmaschine der eingangs genannten Art ist aus der JP 9 024477 A bekannt. Bei dieser Abbrennstumpfschweißmaschine ist ein Servomotor mit einem Kurvengetriebe gekoppelt, der einen translatorisch bewegbaren Kurvenkörper aufweist. Der Kurvenkörper des Kurvengetriebes umfasst eine abschnittsweise gekrümmt ausgebildete Außenoberfläche, die mit einem Abtaster zusammenwirkt, der seinerseits mit einem Haltemittel für einen ersten Fügepartner verbunden ist.

Vor dem Hintergrund der Nachteile von Abbrennstumpfschweißmaschinen mit einer Spindel war es das Anliegen eine Abbrennstumpfschweißmaschine vorzuschlagen, die einerseits einfach und möglichst mit der Hilfe von Software programmierbar ist, mit der sich andererseits ein Stauchschlag mit der gewünschten Intensität durchführen lässt und die ein freies Bewegen des beweglichen Haltemittels beim Glühen ermöglicht.

Die Lösung dieser Aufgabe liefert eine Abbrennstumpfschweißmaschine der eingangs genannten Art mit den Merkmalen des kennzeichnenden Teils des Anspruchs 1.

Wie aus der JP 9 024477 A an sich bekannt, weist die erfindungsgemäße Abbrennstumpfschweißmaschine nach Anspruch 1 einen Antrieb auf, der einen Servomotor umfasst, mit dem ein Kurvenkörper des Kurvengetriebes angetrieben wird.

Mit der Verwendung eines Servomotors anstelle eines während des Schweißvorgangs mit stets gleicher Geschwindigkeit drehenden Motors ist es möglich, die Bewegung des Kurvenkörpers zu beeinflussen. Der Kurvenkörper kann sich dadurch während des Schweißvorgangs schneller oder langsamer drehen.

Der Ablauf des Schweißvorgangs wird dadurch sowohl durch die vom Servomotor getriebene Bewegung des Kurvenköpers als auch durch die Kurve an dem Kurvenkörper vorgegeben. Die Programmierung der Maschine kann dadurch zum einen durch ein Ansteuern des Servomotors erfolgen. Zum anderen ist die Maschine zum Teil durch die Kurve des Kurvenkörpers vorgegeben.

So kann bei einer erfindungsgemäßen Abbrennstumpfschweißmaschine beispielsweise der Stauchschlag in dem Kurvenkörper programmiert sein. Dieses ist beispielsweise dadurch möglich, dass in der Kurve ein Absatz vorgesehen ist, der zu einem Vorschnellen des Abtasters und des mit dem Abtaster verbundenen ersten Haltmittels führt. Dieses Vorschnellen des Abtasters und in Folge dessen auch des ersten Haltemittels kann auch durch einen ersten Abschnitt der Kurve bewirkt werden, der eine unendliche, eine nahezu unendliche oder im Vergleich zu anderen Abschnitten der Kurve um eine deutlich vielfach größere Steigung hat.

Die erfindungsgemäße Maschine weist ein Steuer- und/oder Regelmittel auf, mit welchem eine Drehung des Servomotors und des damit gekoppelten Kurvenkörpers gesteuert und/oder geregelt werden kann. Erfindungsgemäß ist das Steuer- und/oder Regelmittel programmierbar. Alternativ oder zusätzlich kann zwischen Programmen des Steuer- und/oder Regelmittels ausgewählt werden. Mit den Programmen kann eine Sollbewegung des Kurvenkörpers vorgegeben werden, womit im Zusammenspiel mit der Kurve des Kurvenkörpers auch die Bewegung des ersten Haltemittels vorgegeben wird.

Abseits des ersten Abschnitts oder des Absatzes kann die Kurve weitere Abschnitte aufweisen. Auch diese weiteren Abschnitte können eine Programmierung der erfindungsgemäßen Maschine enthalten.

Vorteilhaft weist die erfindungsgemäße Maschine einen Kurvenkörper mit einer Kurve mit wenigstens einem zweiten Abschnitt mit einer gleichbleibenden positiven Steigung auf. Ebenso kann die Kurve des Kurvenköpers, in einem dritten Abschnitt eine gleichbleibende negative Steigung aufweisen.

Durch den Absatz und den zweiten und den dritten Abschnitt der Kurve bzw. durch die drei Abschnitte der Kurve können bei jedem Schweißvorgang vorhandene Bewegungen des ersten Haltemittels programmiert sein. So weisen viele bekannte Abbrennstumpfschweißvorgänge folgende Bewegungen des ersten Haltemittels auf: 1. Auseinanderfahren der Haltemittel, 2. langsames Annähren der Haltemittel, 3. Vorschnellen zum Stauchschlag.

Die meisten Abbrennstumpfschweißvorgänge unterscheiden sich lediglich dadurch, zu welchem Zeitpunkt die Haltemittel welche Position zueinander haben und zu welchem Zeitpunkt die Haltemittel welche Geschwindigkeit haben. Beides kann dadurch eingestellt werden, wie die Kurve von dem Abtaster abgetastet wird bzw. wie der Kurvenköper zur Steuerung der Bewegung des Abtasters bewegt wird.

Die Bewegung des Kurvenköpers wird durch den Servomotor bewirkt, weshalb durch eine Variation der durch den Servomotor verursachten Bewegung des Kurvenkörpers die Bewegung des Abtasters zusätzlich zu den Vorgaben durch die Kurve beeinflusst wird. Mit der Kurve des Kurvenkörpers können auf einfache Art und Weise grundlegende Bewegungsabläufe programmiert werden, während eine genauere Vorgabe der Bewegung durch eine Ansteuerung des Servomotors erreicht werden kann.

Bei einer erfindungsgemäßen Maschine können der erste Abschnitt, der zweite Abschnitt und der dritte Abschnitt oder der Absatz der Kurve des Kurvenkörpers mittelbar oder unmittelbar hintereinander liegen.

Das wenigstens eine Programm des Steuer- und/oder Regelmittels kann zum Beispiel eine Sollbewegung des Kurvenkörpers vorgeben, bei der der Kurvenkörper während eines Programmablaufs beschleunigt und/oder abgebremst wird.

Eine erfindungsgemäße Maschine kann wenigstens eine Feder und/oder wenigstens einen Linearantrieb aufweisen, die bzw. der mit dem ersten Haltemittel gekoppelt ist. Mittels der Feder oder dem Linearantrieb wird das erste Haltemittel mit einer Kraft so beaufschlagt, dass der Abtaster, der mit dem ersten Haltemittel verbunden ist, an der Kurve des Kurvenkörpers anliegt. Ferner kann mit der gleichen oder einer weiteren Feder bzw. mit dem gleichen oder einem weiteren Linearantrieb die notwendige Kraft bereitgestellt werden um den Stauchschlag durchzuführen, wenn der erste Abschnitt oder der Absatz der Kurve erreicht wird.

Bei der Feder kann es sich um eine gewundene Torsionsfeder handeln. Der Linearantrieb kann ein Pneumatikantrieb oder ein Hydraulikantrieb sein.

Sind für den Kontakt zwischen dem Abtaster und der Kurvenscheibe und für den Stauchschlag verschiedene Antriebe vorgesehen, können diese Kräfte in die gleiche Richtung oder in entgegengesetzte Richtungen bereitstellen. Die Antriebe können gegeneinander verriegelt sein, so dass sie nicht gleichzeitig eine Kraft bereitstellen und der eine Antrieb ausgeschaltet ist wenn der andere eingeschaltet ist.

Die Erfindung wird anhand der Zeichnung näher erläutert. Darin zeigen
- Fig. 1: eine schematische Darstellung einer Draufsicht auf eine erfindungsgemäße Abbrennstumpfschweißmaschine,
- Fig. 2: eine vereinfachte erfindungsgemäße Abbrennstumpfschweißmaschine in der Draufsicht,

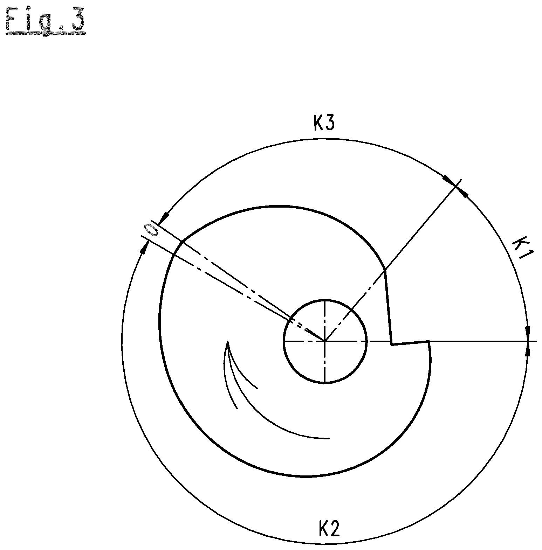

- Fig. 3: eine Kurvenscheibe der Abbrennstumpfschweißmaschine in Figur 2,
- Fig. 4: eine Darstellung der Kurve der Kurvenscheibe gemäß Fig. 3 und
- Fig. 5: eine schematische Darstellung einer Draufsicht auf eine zweite erfindungsgemäße Abbrennstumpfschweißmaschine.

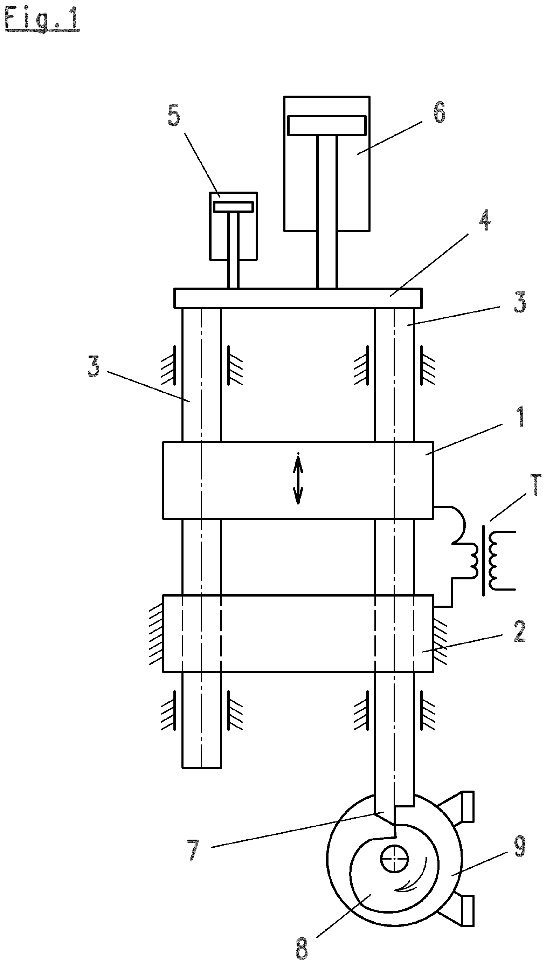

Aus der schematischen Darstellung in Fig. 1 wird die der Erfindung zugrunde liegende Idee deutlich. Die Figur 1 zeigt ein erstes Haltemittel 1 und ein zweites Haltemittel 2, an denen zwei durch Abbrennstumpfschweißen miteinander zu verbindende Fügepartner befestigt werden können. Während das zweite Haltemittel 2 feststeht, ist das erste Haltemittel 1 an zwei Führungsstangen 3 befestigt, die durch das zweite Haltemittel 2 hindurchgeführt und verschiebbar in Führungen gelagert sind.

Jedes der beiden Haltemittel 1, 2 ist mit einem Anschluss einer Sekundärseite eines Schweißtransformators T verbunden, der Teil einer Schweißstromversorgung ist. Die Schweißstromversorgung kann auf jede geeignete Art und Weise gebildet sein.

Die beiden Führungsstangen 3 sind an einem Ende über einen Steg 4 miteinander verbunden. An diesem Steg greifen zwei pneumatische Kolben-Zylinder-Einheiten 5, 6 an, die den Steg 4, die Führungstangen 3 und das erste Haltemittel 1 in Richtung zum zweiten Haltemittel 2 drücken. Eine erste Einheit 5 der Kolben-Zylinder-Einheiten 5, 6 dient dazu den ständigen Kontakt zwischen einem Abtaster 7 und einer Kurvenscheibe 8 sicher zu stellen, während eine zweite Einheit 6 der Kolben-Zylinder-Einheiten 5, 6 dazu dient die notwendige Kraft für den Stauchschlag bereitzustellen. Drückt keine der beiden Kolben-Zylinder-Einheiten 5, 6 des Abtasters 7 gegen die Kurvenscheibe 8, ist der Abtaster in einem begrenzten Umfang frei beweglich.

Eine der beiden Führungsstangen 3 weist an ihrem dem Steg 4 abgewandten Ende den Abtaster 7 auf. Dieser Abtaster 7 wie auch die Kurvenscheibe 8 sind Teile eines Kurvengetriebes. Der Abtaster 7 tastet eine Kurve der Kurvenscheibe 8 ab. Die Kurvenscheibe 8 ist drehbar und von einem Servomotor 9 angetrieben.

Durch die Stellung der Kurvenscheibe 8 wird die Position des ersten Haltemittels 1 zum zweiten Haltemittel 2 vorgegeben.

Durch Bewegung der Kurvenscheibe 8 mittels des Servomotors wird der Zeitpunkt und die Geschwindigkeit vorgegeben zu dem das erste Haltmittel 1 eine Position erreicht bzw. mit der das erste Haltemittel 1 eine Position erreicht.

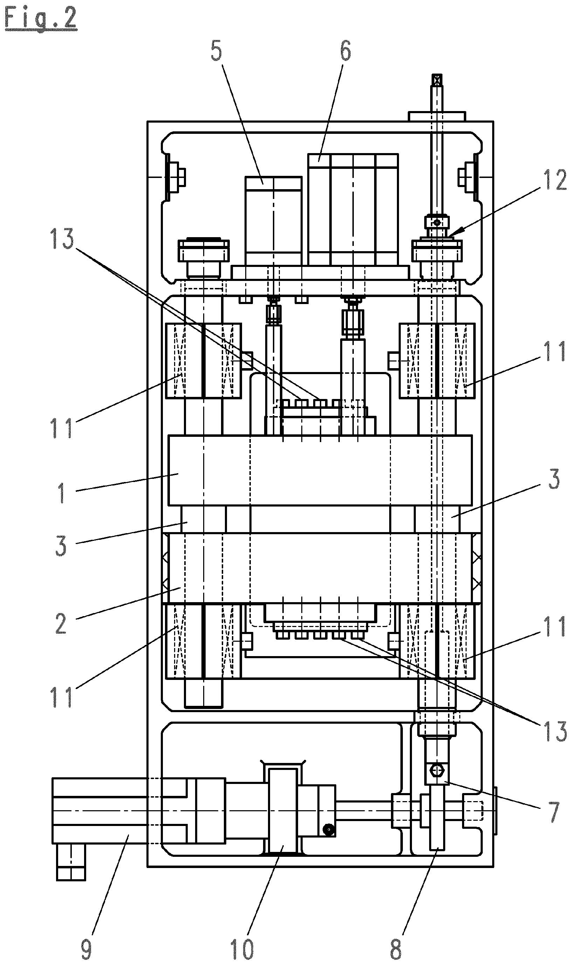

Die vereinfachte Darstellung einer realen Abbrennstumpfschweißmaschine zeigt die in der Figur 1 dargestellten Komponenten ebenfalls. Die bereits in der Figur 1 dargestellten Komponenten sind mit den gleichen Bezugszeichen gekennzeichnet wie in Figur 1. In der Figur 2 ist auch der in Figur 1 nicht dargestellte Servomotor 9 dargestellt. Der Servomotor 9 treibt die Kurvenscheibe 8 über ein Getriebe 10 an.

Außerdem sind in der Figur 2 Führungen 11 dargestellt, in welchen die Führungsstangen 3 verschiebbar gelagert sind, an welchen das erste Haltemittel 1 befestigt ist.

Die in der Figur 2 dargestellte Maschine weist ein Mittel 12 auf, das es ermöglicht den Abstand der Haltemittel, der nach dem Stauchschlag beim Glühen erreicht werden soll, einzustellen. Diese Mittel 12 ermöglichen dazu ein Verschieben des ansonsten fest an den Führungsstangen 3 befestigten ersten Haltemittels 1 zu den Führungsstangen 3.

Fest mit den Haltemitteln 1, 2 verbunden sind elektrische Anschlüsse 13 an die elektrische Leitungen (nicht dargestellt) von einer Schweißstromversorgung an die Haltemittel angeschlossen werden können.

Die Kurvenscheibe 8 weist eine Kurve auf, die sich durch einen sich bei einer Drehung der Kurvenscheibe ändernden Radius einer umlaufenden Fläche der Kurvenscheibe ergibt.

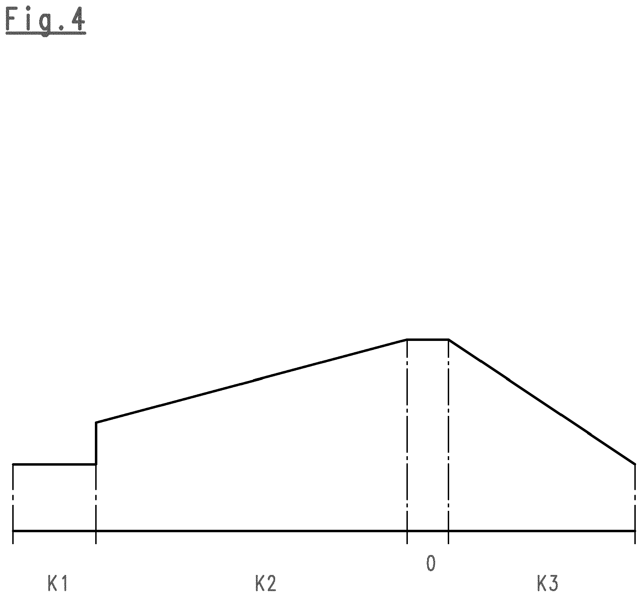

Trägt man diesen Radius der umlaufenden Fläche in Abhängigkeit von der Winkelstellung der Kurvenscheibe 8 auf, ergibt sich das in Figur 4 dargestellte Diagramm.

Der Unterschied zwischen dem größten Radius und dem kleinsten Radius gibt den maximalen Weg an, den das erste Haltemittel 1 bei einer Umdrehung der Kurvenscheibe 8 zurücklegen kann. Der kleinste Radius definiert die dem ersten Haltemittel 1 nächste Position des ersten Haltemittels 1 und der größte Radius definiert die Position mit dem größten Abstand der Haltemittel 1, 2.

Deutlich erkennbar sind drei Abschnitte der Kurve, bei denen der erste Abschnitt k1 von ca. 50° einen Absatz aufweist, der zweite Abschnitt von ca. 215° eine positive Steigung und der dritte Abschnitt k3 von ca. 95° eine negative Steigung hat.

Der Absatz im ersten Abschnitt k1 ermöglicht ein plötzliches, von der zweiten Kolben-Zylinder-Einheit 6 unterstütztes Vorschnellen des ersten Haltemittels 1, um den Stauchschlag durchzuführen.

Durch die Geschwindigkeit, mit welcher der Servomotor 9 die Kurvenscheibe 8 dreht, und durch die Steigung der Kurve wird vorgegeben, wie schnell sich der Abtaster 7 und somit das erste Haltemittel 1 bewegt. Durch die Winkelstellung der Kurvenscheibe wird dagegen der Radius der Umfangsfläche und somit die Position des ersten Haltemittels 1 festgelegt.

Da die Kurvenscheibe 8 durch den Servomotor 9 zu jedem Zeitpunkt in eine Winkelstellung gefahren werden kann, kann jederzeit eine beliebige Position des ersten Haltemittels 1 angefahren werden.

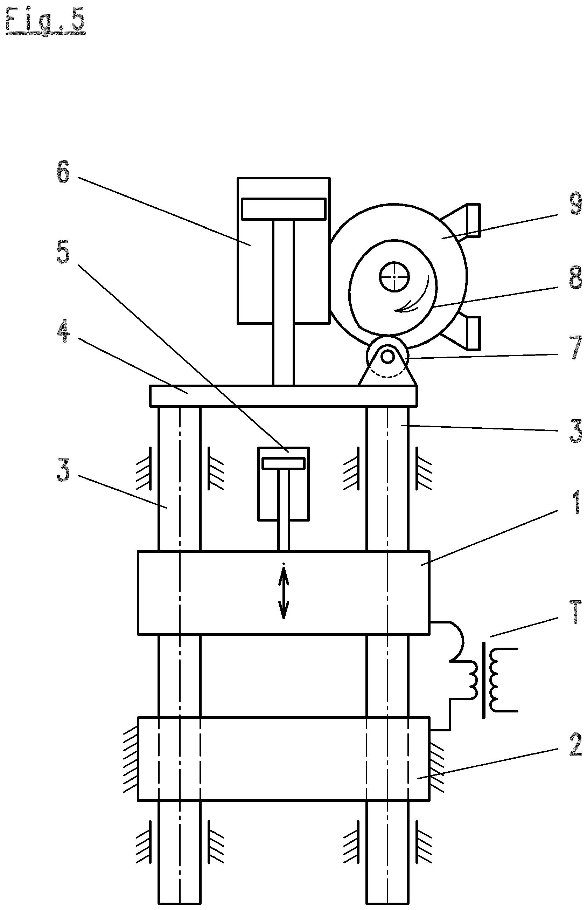

Die in der Figur 5 schematisch dargestellte zweite erfindungsgemäße Abbrennstumpfschweißmaschine entspricht in weiten Teilen der in der Figur 1 dargestellten ersten Abbrennstumpfschweißmaschine. Es werden daher für gleiche oder funktional gleiche Teile der Maschine die gleichen Bezugszeichen verwendet wie in Figur 1.

Der wesentliche Unterschied der Abrennstumpfschweißmaschine gemäß Fig. 5 zu der Abrennstumpfschweißmaschine gemäß Fig. 1 liegt darin, dass der Servomotor 9 und die von dem Servomotor 9 angetriebene Kurvenscheibe 8 sowie der mit der Kurvenscheibe 7 in Kontakt stehende Abtaster 7 auf der Seite des ersten Haltemittels 1 angeordnet sind, an der auch der Steg 4 vorgesehen ist, der die Führungsstangen 3 miteinander verbindet.

Außerdem ist die erste Kolben-Zylinder-Einheit 5 nicht mit dem Steg 4 sondern mit dem ersten Haltemittel 1 verbunden, so dass die von der ersten Einheit 5 bereitgestellte Kraft in das erste Haltemittel 1 und nur mittelbar in den Steg 4 und den damit verbundenen Abtaster 7 eingeleitet wird. Die erste Kolben-Zylinder-Einheit könnte grundsätzlich aber auch mit dem Steg 4 verbunden sein.

Die erste Einheit hat wegen der anderen Anordnung des Servomotors 9, der Kurvenscheibe 8 und des Abtasters 7 eine veränderte Wirkungsrichtung, um den Kontakt zwischen dem Abtaster 7 und der Kurvenscheibe 8 herzustellen. War zur Herstellung des Kontaktes bei der ersten Maschine eine Kraft notwendig, die das erste Haltemittel 1 in Richtung des zweiten Haltemittels 2 drückte, ist bei der zweiten Maschine eine Kraft erforderlich, die das erste Haltemittel 1 weg von dem zweiten Haltemittel 2 zieht, um den Kontakt zwischen dem Abtaster 7 und der Kurvenscheibe 8 herzustellen.

## Patentansprüche

1. Abrennstumpfschweißmaschine
- mit einem Antrieb (9, 10),
- mit einem Kurvengetriebe (7, 8), das mit einem Antrieb gekoppelt ist,
- mit einem ersten Haltemittel (1) zum Halten eines ersten Fügepartners, das mit einem Abtaster (7) des Kurvengetriebes (7, 8) verbunden ist, und
- mit einem zweiten Haltemittel (2) zum Halten eines zweiten Fügepartners,
**dadurch gekennzeichnet, dass** der Antrieb (9, 10) einen Servomotor (9) umfasst, und die Maschine ein Steuer- und/oder Regelmittel aufweist, mit welchem eine Drehung des Servomotors (9) und des damit gekoppelten Kurvenkörpers (8) steuerbar und/oder regelbar ist, wobei das Steuer- und/oder Regelmittel programmierbar ist und/oder zwischen Programmen des Steuer- und/oder Regelmittels auswählbar ist, wobei das wenigstens eine Programm eine Sollbewegung des Kurvenkörpers (8) mit vorgibt.

2. Maschine nach Anspruch 1, **dadurch gekennzeichnet, dass** das Kurvengetriebe (7, 8) einen Kurvenkörper, insbesondere eine Kurvenscheibe (8)aufweist und dass die Kurve des Kurvenkörpers (8) einen Absatz oder einen ersten Abschnitt mit einer unendlichen oder nahezu unendlichen Steigung aufweist.

3. Maschine nach Anspruch 1 oder 2, **dadurch gekennzeichnet, dass** die Kurve wenigsten einen zweiten Abschnitt mit einer gleichbleibenden positiven Steigung aufweist.

4. Maschine nach Anspruch 3, **dadurch gekennzeichnet, dass** die Kurve des Kurvenköpers, in einem dritten Abschnitt eine gleichbleibende negative Steigung aufweist.

5. Maschine nach Anspruch 4, **dadurch gekennzeichnet, dass** der erste Abschnitt, der zweite Abschnitt und der dritte Abschnitt oder der Absatz mittelbar oder unmittelbar hintereinander liegen.

6. Maschine nach einem der Ansprüche 2 bis 5, **dadurch gekennzeichnet, dass** wenigstens ein Programm eine Sollbewegung des Kurvenkörpers mit vorgibt, bei der der Kurvenkörper während eines Programmablaufs beschleunigt und/oder abgebremst wird.

7. Maschine nach einem der Ansprüche 1 bis 6, **dadurch gekennzeichnet, dass** die Maschine eine Feder und/oder einen Linearantrieb (5, 6) aufweist, die bzw. der mit dem ersten Haltemittel (1) gekoppelt ist.

8. Maschine nach Anspruch 7, **dadurch gekennzeichnet, dass** die Feder eine gewundene Torsionsfeder ist.

9. Maschine nach Anspruch 7 oder 8, **dadurch gekennzeichnet, dass** der Linearantrieb ein Pneumatikantrieb (5, 6) oder ein Hydraulikantrieb ist.

## Claims

1. Flash welding machine comprising
- a drive (9, 10),
- a cam gear (7, 8) which is coupled to a drive,
- a first holding means (1) for holding a first joining partner, which is connected to a scanner (7) of the cam gear (7, 8), and
- a second holding means (2) for holding a second joining partner,
**characterised in that** the drive (9, 10) comprises a servomotor (9), and the machine comprises a control and/or regulating means, by means of which a rotation of the servomotor (9) and the cam body (8) coupled thereto can be controlled and/or regulated, wherein the control and/or regulating means is programmable and/or it is possible to select between programs of the control and/or regulating means, wherein also the at least one program specifies a desired movement of the cam body (8).

2. Machine according to claim 1, **characterised in that** the cam gear (7, 8) comprises a cam body, in particular a curved disc (8) and **in that** the curve of the cam body (8) comprises a step or a first section with a continuous or virtually continuous gradient.

3. Machine according to claim 1 or 2, **characterised in that** the curve has at least one second section with a constant positive gradient.

4. Machine according to claim 3, **characterised in that** in a third section the curve of the cam body has a constant negative gradient.

5. Machine according to claim 4, **characterised in that** the first section, the second section and the third section or the step are arranged after one another indirectly or directly.

6. Machine according to any one of claims 2 to 5, **characterised in that** also at least one program specifies a desired movement of the cam body, in which the cam body is accelerated and/or decelerated during the sequence of the program.

7. Machine according to any one of claims 1 to 6, **characterised in that** the machine comprises a spring and/or a linear drive (5, 6) either of which is coupled to the first holding means (1).

8. Machine according to claim 7, **characterised in that** the spring is a wound torsion spring.

9. Machine according to claim 7 or 8, **characterised in that** the linear drive is a pneumatic drive (5, 6) or a hydraulic drive.

## Revendications

1. Machine à souder en bout par étincelage
- avec un dispositif d'entraînement (9, 10),
- avec une commande à came (7, 8), qui est couplée à un dispositif d'entraînement,
- avec un premier moyen de retenue (1) qui est destiné à retenir un premier élément à assembler et qui est relié à un palpeur (7) de la commande à came (7, 8), et
- avec un deuxième moyen de retenue (2) qui est destiné à tenir un deuxième élément à assembler,
**caractérisée en ce que** le dispositif d'entraînement (9, 10) comprend un servomoteur (9), et la machine comporte un moyen de commande et/ou de régulation avec lequel une rotation du servomoteur (9) et du corps de came (8) couplé à celui-ci peut être commandée et/ou régulée,
dans laquelle le moyen de commande et/ou de régulation est programmable et/ou dans laquelle il est possible de choisir entre des programmes du moyen de commande et/ou de régulation, dans laquelle également le au moins un programme prescrit un mouvement de consigne du corps de came (8).

2. Machine selon la revendication 1, **caractérisée en ce que** la commande à came (7, 8) comporte un corps de came, notamment un disque de came (8), et **en ce que** la came du corps de came (8) comporte un gradin ou un premier tronçon avec une pente infinie ou presque infinie.

3. Machine selon la revendication 1 ou 2, **caractérisée en ce que** la came comporte au moins un deuxième tronçon avec une pente positive constante.

4. Machine selon la revendication 3, **caractérisée en ce que** la came du corps de came comporte une pente négative constante dans un troisième tronçon.

5. Machine selon la revendication 4, **caractérisée en ce que** le premier tronçon, le deuxième tronçon et le troisième tronçon ou le gradin se trouvent directement ou indirectement les uns derrière les autres.

6. Machine selon l'une des revendications 2 à 5, **caractérisée en ce qu'**également au moins un programme prescrit un mouvement de consigne du corps de came lors duquel le corps de came est accéléré et/ou freiné pendant une exécution de programme.

7. Machine selon l'une des revendications 1 à 6, **caractérisée en ce que** la machine comporte un ressort et/ou un dispositif d'entraînement linéaire (5, 6) qui est couplé au premier moyen de retenue (1).

8. Machine selon la revendication 7, **caractérisée en ce que** le ressort est un ressort à torsion enroulé.

9. Machine selon la revendication 7 ou 8, **caractérisée en ce que** le dispositif d'entraînement linéaire est un dispositif d'entraînement pneumatique (5, 6) ou un dispositif d'entraînement hydraulique.
